# EUROPÄISCHE PATENTSCHRIFT

(11) **EP 3 258 454 B1**
(45) Veröffentlichungstag und Bekanntmachung des Hinweises auf die Patenterteilung: **06.07.2022**
(21) Anmeldenummer: 17169864.0
(22) Anmeldetag: 08.05.2017
(51) Int. Cl.: G08G 1/16, B60W 30/06, G05D 1/02, B60T 7/22, B62D 15/02, G01S 13/18, G01S 13/931, G01S 15/18, G01S 15/931, G01S 17/931, B60T 8/17, G01S 13/87, G01S 15/87, G01S 17/87

(54) **KONZEPT ZUM ÜBERWACHEN EINES UMFELDS EINES INNERHALB EINES PARKPLATZES FAHRENDEN KRAFTFAHRZEUGS**
CONCEPT FOR MONITORING THE SURROUNDINGS OF A MOTOR VEHICLE DRIVING WITHIN A PARKING LOT
CONCEPT DE SURVEILLANCE D'UN ENVIRONNEMENT D'UN VÉHICULE AUTOMOBILE SE DÉPLAÇANT DANS UN PARKING

(30) Priorität: 17.06.2016 DE 102016210890
(43) Veröffentlichungstag der Anmeldung: 20.12.2017
(73) Patentinhaber: Robert Bosch GmbH, 70442 Stuttgart (DE)
(72) Erfinder: Nordbruch, Stefan, 70806 Kornwestheim (DE)

(56) Entgegenhaltungen:
- DE-A1-102014 200 279
- DE-A1-102014 218 429
- US-A1- 2012 166 058
- US-A1- 2012 221 236

## Beschreibung

Die Erfindung betrifft ein Verfahren und eine Vorrichtung zum Überwachen eines Umfelds eines innerhalb eines Parkplatzes fahrenden Kraftfahrzeugs. Die Erfindung betrifft ferner einen Parkplatz für Kraftfahrzeuge.

Die Erfindung betrifft des Weiteren ein Computerprogramm.

### Stand der Technik

Die Offenlegungsschrift DE 10 2015 107 388 A1 zeigt ein Verfahren zum Detektieren und Verfolgen von Objekten für ein Fahrzeug, das in einem engen Raum fährt.

Die Offenlegungsschrift DE 10 2013 211 126 A1 zeigt ein Verfahren zum Modellieren eines Umfelds eines Fahrzeugs.

Aus DE 10 2014 200 279 A1 ist es bekannt, ein Umfeld eines Fahrzeugs in Teilbereiche bzw. Kacheln zu unterteilen und die Kacheln dahingehend zu überwachen, ob sich jeweils ein Objekt in den Kacheln befindet. Das Überwachen erfolgt mittels Umfeldsensoren, die am Fahrzeug angeordnet sind.

Aus der Offenlegungsschrift DE 10 2014 218 429 A1 ist ein Verfahren zur Ausführung einer zumindest teilweise automatisierten Bewegung eines Fahrzeugs innerhalb eines räumlich begrenzten Bereichs, z.B. eines Parkgeländes, beschrieben. Zur Durchführung des Verfahrens erfasst eine Fahrzeug-Sensorik einen Teil der Umgebung des Fahrzeugs innerhalb des räumlich begrenzten Bereichs und stellt erste Daten bereit, welche ein oder mehrere Objekte in der Umgebung des Fahrzeugs repräsentieren. Eine Außen-Sensorik erfasst einen Teil der Umgebung innerhalb des räumlich begrenzten Bereichs und stellt zweite Daten bereit, die das Fahrzeug und/oder ein oder mehrere Objekte in der Umgebung des Fahrzeugs repräsentieren. Es werden Steuerungsdaten zur Steuerung zumindest einer Fahrfunktion des Fahrzeugs in Abhängigkeit der ersten und zweiten Daten ermittelt. Schließlich erfolgt eine Ansteuerung zumindest eines Aktors des Fahrzeugs in Abhängigkeit von den ermittelten Steuerungsdaten, die zu einer Fahrzeugbewegung oder zu einer Veränderung einer Fahrzeugbewegung führen.

### Offenbarung der Erfindung

Die der Erfindung zugrundeliegende Aufgabe ist darin zu sehen, ein Konzept zum effizienten Überwachen eines Umfelds eines innerhalb eines Parkplatzes fahrenden Kraftfahrzeugs bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Die Erfindung basiert auf der Erkenntnis, dass die obige Aufgabe dadurch gelöst werden kann, dass durch das Festlegen des zumindest eines Teilbereichs sowie das entsprechende Unterteilen des Teilbereichs in mehrere Kacheln effizient ein Bereich innerhalb des Umfelds bestimmt oder definiert werden kann, der aus Sicherheitsaspekten für das Kraftfahrzeug von besonderer Relevanz ist. So ist nicht jeder Bereich innerhalb des Umfelds des Kraftfahrzeugs für das Kraftfahrzeug bei seiner Fahrt besonders relevant. Zum Beispiel bei einer Vorwärtsfahrt des Kraftfahrzeugs ist ein Bereich hinter dem Kraftfahrzeug in der Regel für die Vorwärtsfahrt weniger relevant als ein Bereich vor dem Kraftfahrzeug.

Bei einer Kurvenfahrt ist in der Regel ein seitlicher Bereich des Kraftfahrzeugs von besonderer Relevanz.

Somit ist es also durch das Festlegen eines entsprechenden Teilbereichs des Umfelds sowie durch ein entsprechendes Unterteilen des Teilbereichs in mehrere Kacheln effizient ermöglicht, eine effiziente Überwachung eines innerhalb eines Parkplatzes fahrenden Kraftfahrzeugs angepasst an die konkret vorliegende Fahrsituation zu ermöglichen.

Das Unterteilen der Kacheln weist ferner den Vorteil auf, dass Kacheln in der Regel einfacher zu überwachen sind als ein gesamter Bereich um das Kraftfahrzeug. Zum Beispiel kann es ausreichen, nur die Grenzen der Kacheln zu überwachen, beispielsweise mittels Lichtschranken, anstelle der gesamten Kachel. So können also noch über abstandsmessende Sensoren, wie beispielsweise Radarsensoren oder Ultraschallsensoren, weitere Sensoren, hier beispielsweise Lichtschranken, für die Überwachung der Kacheln verwendet werden.

Weiter können notwendige Berechnungen in Kacheleinheiten durchgeführt werden, so dass nicht mehr unbedingt Abstände Objekt-Kraftfahrzeug benötigt werden.

Dadurch wird also insbesondere der technische Vorteil bewirkt, dass ein Konzept zum effizienten Überwachen eines Umfelds eines innerhalb eines Parkplatzes fahrenden Kraftfahrzeugs bereitgestellt ist. Denn Bereiche, die sich außerhalb des Teilbereichs des Umfelds befinden, müssen somit nicht mehr aufwändig überwacht werden, was zum Beispiel Rechenkapazitäten einsparen kann.

Ein Parkplatz im Sinne der vorliegenden Erfindung kann auch als eine Parkfläche bezeichnet werden und dient als Abstellfläche für Kraftfahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz ist nach einer Ausführungsform als ein Parkhaus ausgebildet. Der Parkplatz ist nach einer Ausführungsform als eine Parkgarage ausgebildet.

Eine Fahrt des Kraftfahrzeugs innerhalb des Parkplatzes umfasst insbesondere eine ferngesteuerte Fahrt des Kraftfahrzeugs. Das heißt also, dass nach einer Ausführungsform vorgesehen ist, dass das Kraftfahrzeug ferngesteuert wird. Zum Beispiel ist das Kraftfahrzeug mittels der Vorrichtung ferngesteuert. Die Vorrichtung umfasst zum Beispiel hierfür eine Fernsteuerungseinrichtung zum Fernsteuern eines Kraftfahrzeugs.

Eine Fahrt des Kraftfahrzeugs innerhalb des Parkplatzes umfasst zum Beispiel eine autonome Fahrt des Kraftfahrzeugs. Das heißt also insbesondere, dass das Kraftfahrzeug autonom innerhalb des Parkplatzes fährt. Das Kraftfahrzeug weist zum Beispiel eine Steuerungseinrichtung auf, die ausgebildet ist, das Kraftfahrzeug autonom innerhalb eines Parkplatzes zu führen.

Eine Fahrt des Kraftfahrzeugs innerhalb des Parkplatzes ist zum Beispiel eine führerlose Fahrt des Kraftfahrzeugs. Das heißt also insbesondere, dass das Kraftfahrzeug führerlos innerhalb des Parkplatzes fährt. Ein führerloses Fahren des Kraftfahrzeugs umfasst insbesondere ein ferngesteuertes Fahren des Kraftfahrzeugs und/oder ein autonomes Fahren des Kraftfahrzeugs.

Erfindungsgemäß ist vorgesehen, dass die mehreren Kacheln unterschiedliche Größen aufweisen. Zum Beispiel ist vorgesehen, dass die mehreren Kacheln teilweise identisch und teilweise unterschiedlich ausgebildet sind. Das heißt also insbesondere, dass einige der Kacheln jeweils eine gleiche Größe aufweisen können, wohingegen andere der Kacheln jeweils eine unterschiedliche Größe aufweisen.

Dadurch wird zum Beispiel der technische Vorteil bewirkt, dass je nach konkret vorliegender Verkehrssituation der Teilbereich entsprechend effizient unterteilt werden kann.

Nach einer Ausführungsform ist vorgesehen, dass, wenn ermittelt wurde, dass sich ein Objekt in einer entsprechenden Kachel befindet, das Verfahren frei von einem Schritt eines Ermittelns eines Abstands zwischen dem sich in der entsprechenden Kachel befindenden Objekt und dem Kraftfahrzeug ist.

Dadurch wird insbesondere der technische Vorteil bewirkt, dass ein Rechenaufwand für das Ermitteln des Abstands eingespart werden kann. Dadurch wird insbesondere in vorteilhafter Weise Rechenzeit eingespart. Dadurch kann in vorteilhafter Weise eine Reaktionszeit auf Ereignisse reduziert werden. Ein Ereignis ist zum Beispiel ein Objekt, welches sich dem Kraftfahrzeug nähert und zum Beispiel auf Kollisionskurs mit diesem ist.

Erfindungsgemäß ist vorgesehen, dass der eine oder die mehreren Umfeldsensoren einen oder mehrere Umfeldsensoren des Kraftfahrzeugs und/oder einen oder mehrere Umfeldsensoren des Parkplatzes umfassen.

Das heißt also insbesondere, dass der Teilbereich zum Beispiel mittels eines oder mittels mehrerer Umfeldsensoren erfasst wird, die zu einer Infrastruktur des Parkplatzes gehören.

Zum Beispiel ist nach einer Ausführungsform vorgesehen, dass der Teilbereich mittels eines oder mittels mehrerer Umfeldsensoren erfasst wird, die zum Kraftfahrzeug gehören.

Dadurch ist in vorteilhafter Weise eine effiziente Überwachung des Teilbereichs ermöglicht. Insbesondere wenn sowohl Umfeldsensoren des Parkplatzes als auch Umfeldsensoren des Kraftfahrzeugs für das Erfassen des Teilbereichs verwendet werden, kann eine besonders genaue Erfassung des Teilbereichs bewirkt werden. Insbesondere kann dann in vorteilhafter Weise effizient ermittelt werden, ob sich in den Kacheln Objekte befinden.

Zum Beispiel ist vorgesehen, dass die Vorrichtung Umfeldsensordaten von einem oder von mehreren Umfeldsensoren des Kraftfahrzeugs über ein Kommunikationsnetzwerk empfängt. Das heißt also insbesondere, dass das Kraftfahrzeug bei seiner Fahrt innerhalb des Parkplatzes mittels seines oder mittels seiner Umfeldsensoren den Teilbereich erfasst und die entsprechenden Umfeldsensordaten an die Vorrichtung sendet.

In einer Ausführungsform umfasst das Kraftfahrzeug einen oder mehrere Umfeldsensoren zum Erfassen des Teilbereichs.

In einer Ausführungsform ist vorgesehen, dass eine Anzahl an Kacheln und ihre jeweilige Position relativ zum Kraftfahrzeug ermittelt wird, die frei von einem Objekt sind, wobei die ermittelte Anzahl mit einem vorbestimmten Kachelmindestschwellwert verglichen wird, wobei basierend auf dem Vergleich und basierend auf den ermittelten Positionen bestimmt wird, ob das Kraftfahrzeug angehalten werden soll oder nicht, wobei, wenn das Bestimmen ergeben hat, dass das Kraftfahrzeug angehalten werden soll, das Kraftfahrzeug angehalten wird.

Dadurch wird insbesondere der technische Vorteil bewirkt, dass effizient bestimmt werden kann, ob das Kraftfahrzeug angehalten werden soll oder nicht.

In dieser Ausführungsform wird also der Umstand berücksichtigt, dass bestimmte Kacheln relevanter für die Entscheidung, ob das Kraftfahrzeug angehalten werden soll, sind als andere Kacheln. Sofern zum Beispiel sich ein Objekt in einer Kachel befindet, die seitlich vom Kraftfahrzeug liegt, so ist dies für die Entscheidung, ob das Kraftfahrzeug anhalten soll oder nicht, bei einer Vorwärtsfahrt des Kraftfahrzeugs in der Regel weniger relevant, als wenn sich ein Objekt in einer Kachel befindet, welche in Fahrtrichtung vor dem Kraftfahrzeug liegt.

Zum Beispiel wird entschieden oder bestimmt, dass das Kraftfahrzeug nicht angehalten wird, wenn drei Kacheln in Fahrtrichtung vor dem Kraftfahrzeug und jeweils eine Kachel links und rechts bezogen auf eine Fahrtrichtung des Kraftfahrzeugs vom Kraftfahrzeug frei von einem Objekt sind.

Dass das Kraftfahrzeug anhalten soll respektive, dass das Kraftfahrzeug angehalten wird, umfasst insbesondere, dass das Kraftfahrzeug ferngesteuert angehalten werden soll respektive, dass das Kraftfahrzeug ferngesteuert angehalten wird. Das heißt also, dass, wenn das Bestimmen ergeben hat, dass das Kraftfahrzeug ferngesteuert anhalten werden soll, das Kraftfahrzeug ferngesteuert angehalten wird. Zum Beispiel ist vorgesehen, dass für das ferngesteuerte Anhalten ein Stopp-Befehl von der Vorrichtung an das Kraftfahrzeug über ein Kommunikationsnetzwerk gesendet wird.

Dass das Kraftfahrzeug anhalten soll respektive, dass das Kraftfahrzeug angehalten wird, umfasst insbesondere, dass das Kraftfahrzeug autonom angehalten werden soll respektive, dass das Kraftfahrzeug autonom anhält.

Nach einer Ausführungsform umfasst ein Kommunikationsnetzwerk im Sinne der vorliegenden Erfindung ein Mobilfunkkommunikationsnetzwerk und/oder ein WLAN-Kommunikationsnetzwerk.

Nach einer Ausführungsform ist vorgesehen, dass die mehreren Kacheln jeweils eine Breite einer Fahrspur des Parkplatzes aufweisen.

In einer Ausführungsform ist vorgesehen, dass die mehreren Kacheln jeweils eine Größe von 1 m mal 2 m oder von 1 m mal 1 m aufweisen.

Eine Länge einer Kachel beträgt zum Beispiel 1 m oder zum Beispiel 2 m oder liegt zum Beispiel zwischen 0,75 m und 1,5 m.

Eine Breite einer Kachel beträgt zum Beispiel 1 m oder liebt zum Beispiel zwischen 0,75 m und 1,5 m.

Dadurch wird insbesondere der technische Vorteil bewirkt, dass der Teilbereich effizient an übliche Kraftfahrzeugabmessungen angepasst ist.

In einer Ausführungsform ist vorgesehen, dass eine jeweilige Größe der Kacheln abhängig von einem oder von mehreren der folgenden Parameter ausgewählt wird: Anzahl an Umfeldsensoren, Detektionsgenauigkeit des oder der Umfeldsensoren, Objektgeschwindigkeit eines erfassten Objekts.

Dadurch wird insbesondere der technische Vorteil bewirkt, dass die Größe für die Kacheln effizient ausgewählt werden kann.

Zum Beispiel wird abhängig von dem oder den Parametern zwischen der Größe 1 m mal 2 m und der Größe 1 m mal 1 m ausgewählt.

Erfindungsgemäß ist vorgesehen, dass ein erster und ein zweiter Teilbereich festgelegt sind, wobei der zweite Teilbereich weiter beabstandet zum Kraftfahrzeug liegt verglichen mit dem ersten Teilbereich, wobei, wenn sich ein Objekt in einer Kachel des zweiten Teilbereichs befindet, eine momentane Kraftfahrzeuggeschwindigkeit auf einen Wert größer Null m/s reduziert wird, wobei, wenn sich ein Objekt in einer Kachel des ersten Teilbereichs befindet, das Kraftfahrzeug angehalten wird.

Dadurch wird insbesondere der technische Vorteil bewirkt, dass eine Flexibilität hinsichtlich unterschiedlicher Reaktionen auf unterschiedliche Ereignisse gegeben ist. Das heißt also, dass Objekte, die sich in einem vorbestimmten Abstand zum Kraftfahrzeug befinden, lediglich zu einem Reduzieren der Kraftfahrzeuggeschwindigkeit auf einen Wert größer 0 m/s führen, wohingegen Objekte, die sich in einem Abstand zum Kraftfahrzeug befinden, der kleiner als der vorgegebene Abstandsschwellwert ist, zu einem sofortigen Anhalten des Kraftfahrzeugs führen. Durch das Vorsehen dieser zwei Teilbereiche kann somit in vorteilhafter Weise bewirkt werden, dass unnötige Stopp-Manöver oder ein unnötiges Anhalten des Kraftfahrzeugs effizient vermieden werden. Dadurch kann in vorteilhafter Weise ein effizienter Betrieb des Parkplatzes bewirkt werden.

Es ist vorgesehen, dass, wenn sich ein Objekt in einer Kachel des zweiten Teilbereichs befindet, ein Aktuator des Kraftfahrzeugs, zum Beispiel eine Bremse, in Bereitschaft versetzt wird. Im Fall einer Bremse bedeutet dies zum Beispiel, dass die Bremse voraktiviert wird. Dadurch kann eine Reaktionszeit effizient reduziert werden.

Nach einer Ausführungsform ist vorgesehen, dass, wenn sich ein Objekt in einer Kachel des zweiten Teilbereichs befindet, die Kacheln des ersten respektive zweiten Teilbereichs mittels zumindest eines weiteren Umfeldsensors überwacht werden, der bisher die entsprechenden Kacheln noch nicht überwacht hat. Dadurch wird zum Beispiel der technische Vorteil bewirkt, dass mittels der Überwachung durch den zumindest einen weiteren Umfeldsensor die Überwachung mittels der bisher verwendeten Umfeldsensoren effizient überprüft werden kann.

Die Kacheln des ersten Teilbereichs weisen erfindungsgemäß eine kleinere Größe auf als die Kacheln des zweiten Teilbereichs. Zum Beispiel weisen die Kacheln des ersten Teilbereichs eine Größe von 1 m mal 1 m auf, wobei die Kacheln des zweiten Teilbereichs eine Größe von 2 m mal 2 m aufweisen.

Nach einer Ausführungsform ist vorgesehen, dass das Verfahren mittels der Vorrichtung durchgeführt wird. Vorrichtungsmerkmale ergeben sich analog aus entsprechenden Verfahrensmerkmalen und umgekehrt. Das heißt also insbesondere, dass sich technische Funktionalitäten des Verfahrens analog aus entsprechenden technischen Funktionalitäten der Vorrichtung und umgekehrt ergeben.

Nach einer Ausführungsform umfasst die Vorrichtung des Parkplatzes eine Kommunikationsschnittstelle, die ausgebildet ist, mit einem Kraftfahrzeug über ein Kommunikationsnetzwerk zu kommunizieren. Bei diesem Kraftfahrzeug handelt sich zum Beispiel um das Kraftfahrzeug, welches innerhalb des Parkplatzes fährt.

Nach einer Ausführungsform umfasst die Vorrichtung des Kraftfahrzeugs eine Kommunikationsschnittstelle, die ausgebildet ist, mit einer Vorrichtung eines Parkplatzes über ein Kommunikationsnetzwerk zu kommunizieren.

In einer weiteren Ausführungsform umfasst die Vorrichtung einen Prozessor, der ausgebildet ist, zumindest einen Teilbereich des Umfelds festzulegen. Der Prozessor ist zum Beispiel ausgebildet, den Teilbereich in mehrere Kacheln zu unterteilen. Der Prozessor ist zum Beispiel ausgebildet, basierend auf den Umfeldsensordaten für die mehreren Kacheln zu ermitteln, ob sich jeweils ein Objekt in den mehreren Kacheln befindet.

Nach einer anderen Ausführungsform ist vorgesehen, dass der Prozessor ausgebildet ist, eine Anzahl an Kacheln und ihre jeweilige Position relativ zum Kraftfahrzeug zu ermitteln, die frei von einem Objekt sind, wobei der Prozessor ausgebildet ist, die ermittelte Anzahl mit einem vorbestimmten Kachelmindestschwellwert zu vergleichen, wobei der Prozessor ausgebildet ist, basierend auf dem Vergleich und basierend auf den ermittelten Positionen zu bestimmen, ob das Kraftfahrzeug angehalten werden soll oder nicht.

Nach einer weiteren Ausführungsform umfasst die Vorrichtung eine Fernsteuerungseinrichtung, die ausgebildet ist, das Kraftfahrzeug ferngesteuert anzuhalten, wenn das Bestimmen ergeben hat, dass das Kraftfahrzeug ferngesteuert angehalten werden soll.

Nach einer Ausführungsform ist vorgesehen, dass der Prozessor ausgebildet ist, einen ersten und einen zweiten Teilbereich festzulegen, wobei der zweite Teilbereich weiter beabstandet vom Kraftfahrzeug liegt verglichen mit dem ersten Teilbereich.

Nach einer Ausführungsform ist die Fernsteuerungseinrichtung respektive die Steuerungseinrichtung ausgebildet, eine momentane Kraftfahrzeuggeschwindigkeit auf einen Wert größer 0 m/s zu reduzieren, wenn sich ein Objekt in einer Kachel des zweiten Teilbereichs befindet.

Nach einer Ausführungsform ist die Fernsteuerungseinrichtung ausgebildet, das Kraftfahrzeug ferngesteuert anzuhalten, wenn sich ein Objekt in einer Kachel des ersten Teilbereichs befindet.

Nach einer Ausführungsform ist die Steuerungseinrichtung ausgebildet, das Kraftfahrzeug autonom anzuhalten, wenn sich ein Objekt in einer Kachel des ersten Teilbereichs befindet.

Ein Umfeldsensor im Sinne der vorliegenden Erfindung ist zum Beispiel einer der folgenden Umfeldsensoren: Radarsensor, Lidarsensor, Lasersensor, Videosensor, insbesondere Videosensor einer Videokamera, Ultraschallsensor, Magnetsensor, Infrarotsensor, Drucksensor, Bewegungsmelder und Lichtschrankensensor.

Nach einer Ausführungsform umfasst der Parkplatz eine Lichtschranke (Lichtschrankensensor). Nach einer Ausführungsform umfasst der Parkplatz als Umfeldsensor einen Drucksensor. Nach einer Ausführungsform umfasst der Parkplatz als Umfeldsensor einen Bewegungsmelder.

Bei mehreren Umfeldsensoren sind diese zum Beispiel gleich oder zum Beispiel unterschiedlich ausgebildet.

Die Formulierung "respektive" umfasst insbesondere die Formulierung "und/oder".

Die Erfindung wird im Folgenden anhand von bevorzugten Ausführungsbeispielen näher erläutert. Hierbei zeigen
- Fig. 1: ein Ablaufdiagramm eines Verfahrens zum Überwachen eines Umfelds eines innerhalb eines Parkplatzes fahrenden Kraftfahrzeugs,
- Fig. 2: eine Vorrichtung zum Überwachen eines Umfelds eines innerhalb eines Parkplatzes fahrenden Kraftfahrzeugs,
- Fig. 3: einen Parkplatz für Kraftfahrzeuge,
- Fig. 4: ein Kraftfahrzeug und
- Fig. 5: einen ersten und einen zweiten Teilbereich eines Umfelds eines weiteren Kraftfahrzeugs.

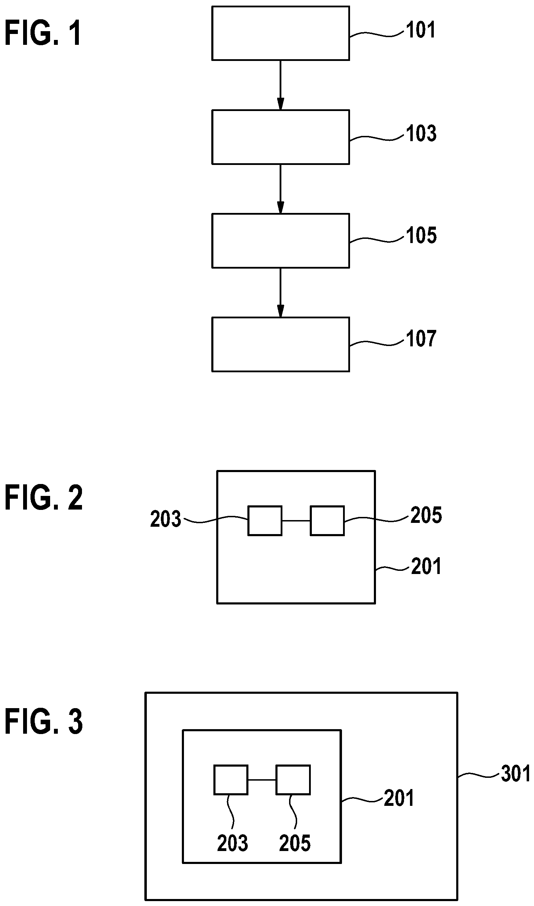

Fig. 1 zeigt ein Ablaufdiagramm eines Verfahrens zum Überwachen eines Umfelds eines innerhalb eines Parkplatzes fahrenden Kraftfahrzeugs.

Das Verfahren umfasst die folgenden Schritte:
- Festlegen 101 zumindest eines Teilbereichs des Umfelds,
- Unterteilen 103 des Teilbereichs in mehrere Kacheln,
- Erfassen 105 des Teilbereichs mittels eines oder mehrerer Umfeldsensoren, um der Erfassung entsprechende Umfeldsensordaten zu ermitteln,
- Ermitteln 107 basierend auf den Umfeldsensordaten für die mehreren Kacheln, ob sich jeweils ein Objekt in den mehreren Kacheln befindet.

Fig. 2 zeigt eine Vorrichtung 201 zum Überwachen eines Umfelds eines innerhalb eines Parkplatzes fahrenden Kraftfahrzeugs.

Die Vorrichtung 201 umfasst einen Prozessor 203, der ausgebildet ist, zumindest einen Teilbereich des Umfelds festzulegen. Der Prozessor 203 ist ausgebildet, den Teilbereich in mehrere Kacheln zu unterteilen.

Die Vorrichtung 201 umfasst einen Umfeldsensor 205 zum Erfassen des Teilbereichs. In einer nicht gezeigten Ausführungsform sind mehrere Umfeldsensoren 205 vorgesehen. Der Umfeldsensor 205 erfasst den Teilbereich, so dass aus der Erfassung entsprechende Umfeldsensordaten ermittelt werden können.

Der Prozessor 203 ist ausgebildet, basierend auf den ermittelten Umfeldsensordaten für die mehreren Kacheln zu ermitteln, ob sich jeweils ein Objekt in den mehreren Kacheln befindet.

Fig. 3 zeigt einen Parkplatz 301 für Kraftfahrzeuge als schematisches Blockdiagramm. Der Parkplatz 301 umfasst die Vorrichtung 201 der Fig. 2.

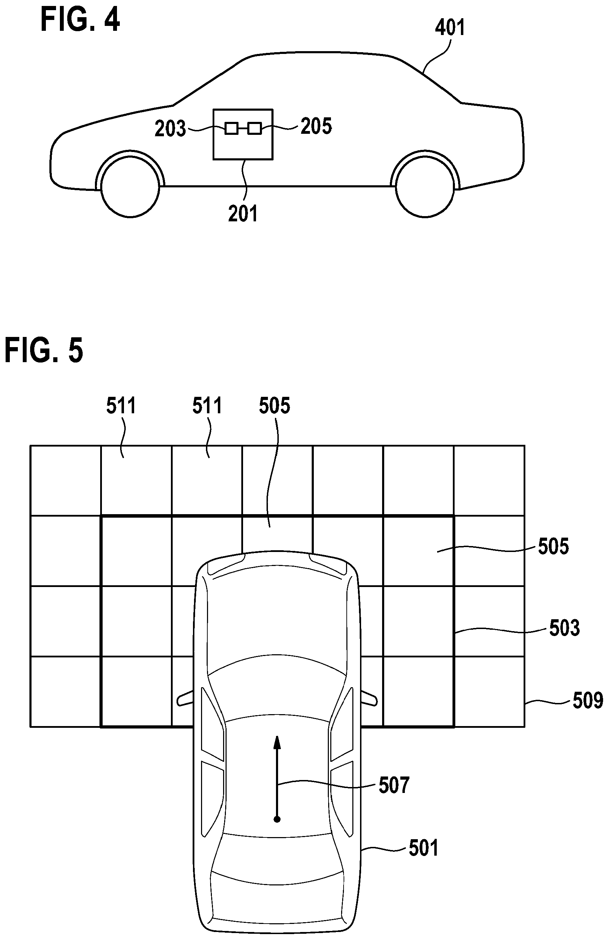

Fig. 4 zeigt ein Kraftfahrzeug 401.

Das Kraftfahrzeug 401 umfasst die Vorrichtung 201 der Fig. 2.

Fig. 5 zeigt ein weiteres Kraftfahrzeug 501. Bei dem weiteren Kraftfahrzeug 501 kann es sich zum Beispiel um das Kraftfahrzeug 401 der Fig. 4 handeln.

Eine Fahrtrichtung des Kraftfahrzeugs 501 ist mit einem Pfeil mit dem Bezugszeichen 507 gekennzeichnet.

Es sind zwei Teilbereiche 503, 509 im Umfeld des Kraftfahrzeugs 501 festgelegt. Der Teilbereich 509 liegt verglichen zum Teilbereich 503 weiter entfernt zum Kraftfahrzeug 501.

Das heißt also, dass der Teilbereich 509 als ein zweiter Teilbereich bezeichnet werden kann. Der Teilbereich 503 kann als ein erster Teilbereich bezeichnet werden.

Der erste Teilbereich 503 ist in mehrere Kacheln 505 unterteilt. Der zweite Teilbereich 509 ist in mehrere Kacheln 511 unterteilt.

Basierend auf einer Umfelderfassung der beiden Teilbereiche 503, 509 wird ermittelt, ob sich in den Kacheln 505, 511 Objekte befinden. Es wird davon abgesehen, wenn ein Objekt innerhalb einer Kachel gefunden wurde, einen Abstand von dem Objekt zum Kraftfahrzeug 501 zu ermitteln. Das heißt also, dass erfindungsgemäß nach einer Ausführungsform lediglich vorgesehen ist, zu ermitteln, ob sich in einer Kachel eines Teilbereichs ein Objekt befindet oder nicht. Es wird kein Abstand von dem Objekt zum Kraftfahrzeug ermittelt.

Wenn auf eine solche Abstandsermittlung verzichtet wird, können zum Beispiel in vorteilhafter Weise Lichtschranken für die Umfelderfassung verwendet werden. Lichtschranken gehören zu Sensoriken, mittels derer in der Regel kein Abstand gemessen werden kann im Gegensatz zu abstandsmessenden Sensoriken wie zum Beispiel einem Radarsensor.

Ferner kann die Überwachung besonders effizient durchgeführt werden, wenn von einem Abstandsermitteln abgesehen wird.

Wenn festgestellt wird, dass sich ein Objekt in einer Kachel 511 des zweiten Teilbereichs 509 befindet, so ist erfindungsgemäß vorgesehen, dass eine momentane Kraftfahrzeuggeschwindigkeit des Kraftfahrzeugs 501 auf einen Wert größer 0 m/s reduziert wird. Das Reduzieren führt das Kraftfahrzeug 501 nach einer Ausführungsform selbständig, also autonom, durch. Zum Beispiel wird für das Reduzieren ein entsprechender Fernsteuerungsbefehl an das Kraftfahrzeug 501 gesendet.

Sofern festgestellt wird, dass sich ein Objekt in einer Kachel 505 des ersten Teilbereichs 503 befindet, so ist erfindungsgemäß vorgesehen, dass das Kraftfahrzeug 501 angehalten wird. Das Anhalten umfasst ein autonomes Anhalten des Kraftfahrzeugs 501. Das heißt also, dass das Kraftfahrzeug 501 autonom anhält. Zum Beispiel wird das Kraftfahrzeug 501 ferngesteuert angehalten.

Zusammenfassend umfasst die Erfindung also insbesondere den Gedanken, einen Teilbereich um das Kraftfahrzeug zumindest teilweise herumzulegen, der zum Beispiel schachbrettartig in mehrere Kacheln unterteilt ist. Die Kacheln sind zum Beispiel 1 m mal 1 m oder 1 m mal 2 m groß. Die Kacheln, die auch als Zonen bezeichnet werden können, werden zum Beispiel kontinuierlich, also regelmäßig, auf ein Vorhandensein eines Objekts überprüft. Vorzugsweise ist vorgesehen, dass nur ein Vorhandensein von Objekten in den Kacheln überprüft wird, es wird jedoch nicht ein Abstand von einem gefundenen Objekt zum Kraftfahrzeug ermittelt.

Nach einer Ausführungsform wird nur überprüft, ob eine vorgegebene Anzahl von Kacheln vor respektive seitlich vom Kraftfahrzeug als frei von Objekten erkannt wurde. Wenn dies der Fall ist, so ist nach einer Ausführungsform vorgesehen, dass das Kraftfahrzeug seine Fahrt nicht unterbricht, also fortsetzt. Zum Beispiel werden bei einer Vorwärtsfahrt des Kraftfahrzeugs drei Kacheln vor dem Kraftfahrzeug und jeweils eine links und eine rechts vom Kraftfahrzeug und eine hinter dem Kraftfahrzeug überwacht.

Erfindungsgemäß sind mehrere Teilbereiche festgelegt, zum Beispiel der erste und der zweite Teilbereich, wie vorstehend erläutert.

Erfindungsgemäß werden die Kacheln, also der Teilbereich, mittels eines oder mittels mehrerer Umfeldsensoren überwacht, die zu einer Infrastruktur des Parkplatzes gehören.

In einer Ausführungsform werden zusätzlich oder anstelle zur Überwachung mittels der Umfeldsensoren des Parkplatzes noch ein oder mehrere Umfeldsensoren des Kraftfahrzeugs für die Überwachung der Kacheln verwendet.

Als Umfeldsensoren können zum Beispiel, insbesondere wenn es sich hier um Umfeldsensoren einer Infrastruktur des Parkplatzes handelt, eine Vielzahl von unterschiedlichen Sensoren verwendet werden, da insbesondere nur eine Anwesenheit von Objekten innerhalb einer Zone ermittelt werden muss, insofern gemäß einer Ausführungsform von einem Ermitteln eines Abstands eines Objekts zum Kraftfahrzeug abgesehen wird. Das heißt also, dass zum Beispiel nur Räume, Flächen, respektive Grenzen der Kacheln, die allgemein auch als "Grids" bezeichnet werden können, überwacht werden. Dadurch können in vorteilhafter Weise zum Beispiel auch Lichtschranken, Bewegungsmelder und/oder Drucksensoren verwendet werden.

Wesentliche Vorteile des erfindungsgemäßen Konzepts sind insbesondere in einer Vereinfachung der Berechnungen zu sehen, insofern zum Beispiel nur Anwesenheiten von Objekten, aber keine Abstände von den Objekten zum Kraftfahrzeug, berechnet werden müssen.

Insbesondere kann dadurch eine Vielzahl an Sensortechnologien, zum Beispiel Lichtschranken und/oder Drucksensoren, für die Überwachung der Kacheln verwendet werden.

## Patentansprüche

1. Verfahren zum Überwachen eines Umfelds eines innerhalb eines Parkplatzes (301) fahrenden Kraftfahrzeugs (401, 501), umfassend die folgenden Schritte:
- Festlegen (101) zumindest eines Teilbereichs (503, 509) des Umfelds,
- Unterteilen (103) des Teilbereichs (503, 509) in mehrere Kacheln (505, 511),
- Erfassen (105) des Teilbereichs (503, 509) mittels eines oder mehrerer Umfeldsensoren, um der Erfassung entsprechende Umfeldsensordaten zu ermitteln,
- Ermitteln (107) basierend auf den Umfeldsensordaten für die mehreren Kacheln (505, 511), ob sich jeweils ein Objekt in den mehreren Kacheln (505, 511) befindet,
wobei der eine oder die mehreren Umfeldsensoren einen oder mehrere Umfeldsensoren des Parkplatzes (301) umfassen, wobei der eine oder die mehreren Umfeldsensoren zu einer Infrastruktur des Parkplatzes gehören,
wobei ein erster und ein zweiter Teilbereich (503, 509) festgelegt sind, wobei der zweite Teilbereich (509) weiter beabstandet zum Kraftfahrzeug (401, 501) liegt verglichen mit dem ersten Teilbereich (503) und dass die Kacheln des ersten Teilbereichs eine kleinere Größe aufweisen als die Kacheln des zweiten Teilbereichs, wobei, wenn sich ein Objekt in einer Kachel (511) des zweiten Teilbereichs (509) befindet, eine momentane Kraftfahrzeuggeschwindigkeit auf einen Wert größer Null m/s reduziert wird und ein Aktuator des Kraftfahrzeugs, insbesondere eine Bremse, in Bereitschaft versetzt wird, und wobei, wenn sich ein Objekt in einer Kachel (505) des ersten Teilbereichs (503) befindet, das Kraftfahrzeug (401, 501) autonom angehalten wird.

2. Verfahren nach Anspruch 1, wobei, wenn ermittelt wurde, dass sich ein Objekt in einer entsprechenden Kachel (505, 511) befindet, das Verfahren frei von einem Schritt eines Ermittelns eines Abstands zwischen dem sich in der entsprechenden Kachel (505, 511) befindenden Objekt und dem Kraftfahrzeug (401, 501) ist.

3. Verfahren nach Anspruch 1, wobei der eine oder die mehreren Umfeldsensoren einen oder mehrere Umfeldsensoren des Kraftfahrzeugs (401, 501) umfassen.

4. Verfahren nach einem der vorherigen Ansprüche, wobei eine Anzahl an Kacheln (505, 511) und ihre jeweilige Position relativ zum Kraftfahrzeug (401, 501) ermittelt wird, die frei von einem Objekt sind, wobei die ermittelte Anzahl mit einem vorbestimmten Kachelmindestschwellwert verglichen wird, wobei basierend auf dem Vergleich und basierend auf den ermittelten Positionen bestimmt wird, ob das Kraftfahrzeug (401, 501) angehalten werden soll oder nicht, wobei, wenn das Bestimmen ergeben hat, dass das Kraftfahrzeug (401, 501) angehalten werden soll, das Kraftfahrzeug (401, 501) autonom anhält.

5. Verfahren nach einem der vorherigen Ansprüche, wobei die mehreren Kacheln (505, 511) jeweils eine Breite einer Fahrspur des Parkplatzes (301) aufweisen.

6. Verfahren nach einem der vorherigen Ansprüche, wobei eine jeweilige Größe der Kacheln (505, 511) abhängig von einem oder von mehreren der folgenden Parameter ausgewählt wird: Anzahl an Umfeldsensoren, Detektionsgenauigkeit des oder der Umfeldsensoren, Objektgeschwindigkeit eines erfassten Objekts.

7. Vorrichtung (201) zum Überwachen eines Umfelds eines innerhalb eines Parkplatzes (301) fahrenden Kraftfahrzeugs (401, 501), umfassend einen oder mehrere Umfeldsensoren eines Parkplatzes, wobei die Vorrichtung (201) ausgebildet ist, das Verfahren nach einem der vorherigen Ansprüche durchzuführen.

8. Parkplatz (301) für Kraftfahrzeuge (401, 501), umfassend die Vorrichtung (201) nach Anspruch 8.

9. Computerprogramm, umfassend Programmcode zur Durchführung des Verfahrens nach einem der Ansprüche 1 bis 6, wenn das Computerprogramm auf einem Computer ausgeführt wird.

## Claims

1. Method for monitoring an environment of a motor vehicle (401, 501) driving inside a car park (301), comprising the following steps of:
- determining (101) at least one section (503, 509) of the environment,
- dividing (103) the section (503, 509) into a plurality of tiles (505, 511),
- capturing (105) the section (503, 509) by means of one or more environmental sensors in order to determine environmental sensor data corresponding to the capture,
- determining (107), on the basis of the environmental sensor data for the plurality of tiles (505, 511), whether there is an object in the plurality of tiles (505, 511) in each case,
wherein the one or more environmental sensors comprise one or more environmental sensors of the car park (301), wherein the one or more environmental sensors belong to an infrastructure of the car park, wherein a first and a second section (503, 509) are determined, wherein the second section (509) is at a greater distance from the motor vehicle (401, 501) than the first section (503), and the tiles in the first section have a smaller size than the tiles in the second section, wherein, if there is an object in a tile (511) in the second section (509), an instantaneous motor vehicle speed is reduced to a value of greater than zero m/s and an actuator of the motor vehicle, in particular a brake, is changed to a standby state, and wherein, if there is an object in a tile (505) in the first section (503), the motor vehicle (401, 501) is stopped autonomously.

2. Method according to Claim 1, wherein, if it has been determined that there is an object in a corresponding tile (505, 511), the method is free from a step of determining a distance between the object in the corresponding tile (505, 511) and the motor vehicle (401, 501).

3. Method according to Claim 1, wherein the one or more environmental sensors comprise one or more environmental sensors of the motor vehicle (401, 501) .

4. Method according to one of the preceding claims, wherein a number of tiles (505, 511) which are free from an object and their respective position relative to the motor vehicle (401, 501) are determined, wherein the determined number is compared with a predetermined tile minimum threshold value, wherein it is determined, on the basis of the comparison and on the basis of the determined positions, whether or not the motor vehicle (401, 501) is intended to be stopped, wherein, if the determination has revealed that the motor vehicle (401, 501) is intended to be stopped, the motor vehicle (401, 501) stops autonomously.

5. Method according to one of the preceding claims, wherein the plurality of tiles (505, 511) each have a width of a lane of the car park (301).

6. Method according to one of the preceding claims, wherein a respective size of the tiles (505, 511) is selected on the basis of one or more of the following parameters: number of environmental sensors, detection accuracy of the environmental sensor(s), object speed of a captured object.

7. Apparatus (201) for monitoring an environment of a motor vehicle (401, 501) driving inside a car park (301), comprising one or more environmental sensors of a car park, wherein the apparatus (201) is designed to carry out the method according to one of the preceding claims.

8. Car park (301) for motor vehicles (401, 501), comprising the apparatus (201) according to Claim 7.

9. Computer program comprising program code for carrying out the method according to one of Claims 1 to 6 when the computer program is executed on a computer.

## Revendications

1. Procédé de surveillance d'un environnement d'un véhicule automobile (401, 501) circulant dans un parc de stationnement (301), ledit procédé comprenant les étapes suivantes :
- spécifier (101) au moins une sous-zone (503, 509) de l'environnement,
- subdiviser (103) la sous-zone (503, 509) en une pluralité de carreaux (505, 511),
- détecter (105) la sous-zone (503, 509) au moyen d'un ou plusieurs capteurs d'environnement afin de déterminer des données de capteur d'environnement correspondant à la détection,
- déterminer (107), sur la base des données de capteur d'environnement, pour la pluralité de carreaux (505, 511), si un objet se trouve dans chaque carreau de la pluralité de carreaux (505, 511),
le ou les capteurs d'environnement comprenant un ou plusieurs capteurs d'environnement du parc de stationnement (301), le ou les capteurs d'environnement appartenant à une infrastructure du parc de stationnement,
une première et une deuxième sous-zone (503, 509) étant spécifiées, la deuxième sous-zone (509) étant plus éloignée du véhicule automobile (401, 501) relativement à la première sous-zone (503) et les carreaux de la première sous-zone ayant une taille plus petite que les carreaux de la deuxième sous-zone, une vitesse instantanée du véhicule automobile étant réduite à une valeur supérieure à zéro m/s et un actionneur du véhicule automobile, notamment un frein, étant mis en veille, lorsqu'un objet se trouve dans un carreau (511) de la deuxième sous-zone (509), et le véhicule automobile (401, 501) étant arrêté de façon autonome lorsqu'un objet se trouve dans un carreau (505) de la première sous-zone (503) .

2. Procédé selon la revendication 1, lorsqu'un objet a été déterminé comme se trouvant dans un carreau correspondant (505, 511), le procédé étant exempt d'une étape de détermination d'une distance entre l'objet se trouvant dans le carreau correspondant (505, 511) et le véhicule automobile (401, 501).

3. Procédé selon la revendication 1, le ou les capteurs d'environnement comprenant un ou plusieurs capteurs d'environnement du véhicule automobile (401, 501).

4. Procédé selon l'une des revendications précédentes, un certain nombre de carreaux (505, 511), dépourvus d'objet, et leur position respective par rapport au véhicule automobile (401, 501) étant déterminés, le nombre déterminé étant comparé à une valeur de carreau seuil minimale prédéterminée, l'arrêt ou non du véhicule automobile (401, 501) étant déterminé sur la base de la comparaison et sur la base des positions déterminées, le véhicule automobile (401, 501) s'arrêtant de manière autonome si la détermination a montré que le véhicule automobile (401, 501) doit être arrêté.

5. Procédé selon l'une des revendications précédentes, la pluralité de carreaux (505, 511) ayant chacun une largeur d'une voie de roulement du parc de stationnement (301) .

6. Procédé selon l'une des revendications précédentes, une taille respective des carreaux (505, 511) étant choisie en fonction d'un ou plusieurs des paramètres suivants : nombre de capteurs d'environnement, précision de détection du ou des capteurs d'environnement, vitesse d'un objet détecté.

7. Dispositif (201) de surveillance d'un environnement d'un véhicule automobile (401, 501) circulant dans un parc de stationnement (301), ledit dispositif comprenant un ou plusieurs capteurs d'environnement d'un parc de stationnement, le dispositif (201) étant conçu pour mettre en œuvre le procédé selon l'une des revendications précédentes.

8. Parc de stationnement (301) destiné à des véhicules automobiles (401, 501) et comprenant le dispositif (201) selon la revendication 7.

9. Logiciel, comprenant un code de programme destiné à mettre en œuvre le procédé selon l'une des revendications 1 à 6, lorsque le logiciel est exécuté sur un ordinateur.
